# FASCICULE DE BREVET EUROPEEN

(11) **EP 3 264 889 B1**
(45) Date de publication et mention de la délivrance du brevet: **10.11.2021**
(21) Numéro de dépôt: 16719467.9
(22) Date de dépôt: 02.03.2016
(51) Int. Cl.: B24C 3/06, B24C 9/00, B24B 29/02, B24B 57/02, A01K 63/10

(54) **SYSTEME ET PROCEDÉ DE POLISSAGE DE PAROIS DE BASSINS AQUATIQUES**
SYSTEM UND VERFAHREN ZUM POLIEREN WÄNDEN VON WASSERBEHÄLTERN
SYSTEM AND METHOD FOR POLISHING WALLS OF AQUATIC ENCLOSURES

(30) Priorité: 06.03.2015 FR 1500439
(43) Date de publication de la demande: 10.01.2018
(73) Titulaire: Abyssnaut, 63880 Olliergues (FR)
(72) Inventeur: BERANGUER, Jérôme, 63880 Olliergues (FR)
(74) Mandataire: Gabriel, Franck
(86) Numéro de dépôt international: PCT/IB2016/000216
(87) Numéro de publication internationale: WO 2016/142762

(56) Documents cités:
- DE-U1- 29 721 711
- FR-A1- 2 335 269
- FR-A5- 2 175 493
- JP-U- H0 354 787
- US-A- 3 337 889
- US-A- 4 709 513
- US-A- 5 806 463
- US-A1- 2004 133 999
- US-A1- 2011 100 400

## Description

### DOMAINE TECHNIQUE DE L'INVENTION

La présente invention concerne un système de traitement par polissage de parois internes de bassins aquatiques. La présente invention concerne également le procédé de polissage correspondant.

### ETAT DE LA TECHNIQUE ANTERIEURE

De manière générale, la faune et la flore installées dans un bassin aquatique, doivent pouvoir vivre de la manière la plus naturelle possible. Ainsi les bassins aquatiques nécessitent d'être traités régulièrement, tant pour le bien-être des êtres vivants, que du fait des dégradations naturelles et physiques dont ils font l'objet. Les bassins aquatiques sont destinés à être visualisés et doivent par conséquent comporter des parois lisses et polies avec une haute qualité dé transparence. Un polissage des surfaces transparentes des bassins aquatiques doit par conséquent être régulièrement effectué. Différents procédés de l'art antérieur permettent d'effectuer le polissage des surfaces transparentes des aquariums. Pour autant, de tels procédés nécessitent bien souvent non seulement des moyens intrusifs néfastes envers les formes de vie présentes dans les bassins aquatiques, mais également une intervention humaine lourde et non aisément mise en œuvre.

De manière générale, le polissage de surfaces transparentes de bassins aquatiques est effectué artisanalement. Les grands bassins sont nettoyés et polis par des plongeurs, qui agissent en binôme et effectuent le travail de façon manuelle. Une telle démarche est fastidieuse, longue et potentiellement dangereuse vis-à-vis de certains animaux, tels que des requins, présents dans le bassin aquatique, ce qui implique que l'un des plongeurs surveille les animaux le temps que son coéquipier effectue le traitement. Un autre inconvénient découlant d'un tel traitement artisanal est qu'il nécessite un certain nombre d'équipes de plongeurs et une durée conséquente de réalisation du traitement puisque les plongeurs peuvent rester sous l'eau uniquement pour des durées relativement courtes.

De façon courante, les plongeurs utilisent des polisseurs à disques abrasifs. De tels disques de polissage s'usent très vite et doivent par conséquent être très souvent remplacés. Ils présentent également l'inconvénient de rendre le dosage de la force de polissage très délicat. Dans certains cas par exemple, lors du passage d'un disque très doux à un disque très abrasif, un plongeur inattentif peut endommager la paroi à traiter. De plus, des particules sont rejetées dans le bassin lors du traitement. On connaît également divers types de dispositifs permettant d'effectuer des actions de polissage et/ou de nettoyage à partir de moyens de déplacement ou commande prévus du côté extérieur du bassin. Plusieurs de ces systèmes utilisent des moyens magnétiques pour relier un élément externe à un élément interne.

Par exemple, la demande de brevet EP2012581 propose un dispositif de nettoyage de vitres d'aquarium, et notamment de vitres internes d'aquarium. Ce dispositif comporte un élément qui peut être positionné sur la paroi interne de la vitre d'aquarium. Le dispositif comprend également un élément externe qui est positionné sur la face externe de la paroi. Les éléments internes et externes du dispositif sont respectivement attirés par la force magnétique de façon à ce que l'élément interne du dispositif suive les mouvements de l'élément externe. Une surface de nettoyage est installée au sein du dispositif, cette surface est tournée directement contre la paroi interne de l'aquarium. L'invention intègre par conséquent la méthode de nettoyage d'une surface intérieure de la vitre d'un aquarium.

Le document EP1947932 concerne également un dispositif de nettoyage d'aquarium disposant d'un composant interne qui comporte une plaque servant de surface de nettoyage, ainsi qu'un composant de nettoyage alternativement opératif, situé sur une surface opposée à la surface à nettoyer. Un élément magnétique est placé sur la plaque et un moyen de flottaison figure à une extrémité de la plaque. Un composant extérieur comporte un corps se fixant à la surface extérieure d'une paroi de l'aquarium. Un second élément magnétique est porté par le corps, de telle sorte que le corps peut être positionné entre les deux éléments magnétiques avec la surface de nettoyage adjacente à la paroi d'aquarium. En déplaçant le corps entre les premières et secondes positions, le composant interne est déplacé à l'intérieur de l'aquarium afin de nettoyer différentes surfaces.

Egalement, la demande WO2008006259 décrit un nettoyeur magnétique de vitres d'aquarium comprenant un élément de nettoyage intérieur destiné à glisser sur la surface intérieure de la vitre. Cet élément nettoyeur intérieur comprend un couvercle frontal, un couvercle dorsal, un aimant, ainsi qu'une surface de nettoyage. Le dispositif comprend également un élément nettoyeur extérieur positionné sur la surface extérieure de la vitre. La forme magnétique entre les éléments nettoyeurs intérieurs et extérieurs permet d'entrainer le mouvement de l'élément de nettoyage intérieur par déplacement de l'élément de nettoyage extérieur.

La demande EP1738642 concerne un dispositif de nettoyage de surface interne d'un aquarium comportant un corps intérieur. Le corps intérieur comporte une surface de nettoyage composée de mousse, destinée à être en contact avec la paroi à nettoyer. Le corps intérieur est déplacé sur la surface magnétique grâce à la force magnétique le liant à un composant extérieur.

Le document WO2007127472 constitue encore un autre exemple de traitement et propose un mécanisme de préparation de surface à distance, telle que le nettoyage de la surface intérieure d'un aquarium géré de l'extérieur. Le dispositif de nettoyage comprend un corps doté d'au moins un élément magnétique qui est couplé, pour la commande à distance, avec des éléments magnétiques complémentaires, dans une tête d'entraînement mobile située à distance. Le mécanisme comprend un système d'ajustement permettant de faire varier l'intensité des forces magnétiques réalisant le couplage entre l'ensemble de préparation de surface à distance, et le mécanisme. Enfin, le document WO0040080 décrit un dispositif de nettoyage de vitres d'aquariums, notamment de l'intérieur de vitres d'aquarium. Le dispositif comprend un élément intérieur, placé sur la paroi intérieure de la vitre, et un élément extérieur placé sur le côté extérieur de la vitre de l'aquarium. Ces éléments intérieurs et extérieurs s'attirent mutuellement sous l'effet d'une force magnétique, de sorte que le mouvement de l'élément extérieur le long de la vitre de l'aquarium provoque le même mouvement de l'élément intérieur. Le dispositif se caractérise en ce que l'élément placé à l'intérieur de l'aquarium est conçu pour flotter sur le milieu liquide contenu dans l'aquarium lorsque la force magnétique ne s'applique plus.

Le document FR2335269 décrit un boitier recevant une pression due au milieu ambiant du fait que le dispositif est immergé dans l'eau. La cavité interne est reliée à une pompe à vide créant une zone à basse pression à l'intérieur du dispositif. Le différentiel de pression crée un dispositif qui adhère à la paroi à traiter. Il se produit un effet ventouse. Il est possible de prévoir plusieurs zones de ventouses pour plus de souplesse. En variante, le document décrit une roue à aube montée rotative qui accélère les particules projetées contre la paroi.

L'état de la technique, tel qu'illustré par les documents sus-cités, propose des systèmes permettant de polir et/ou nettoyer des surfaces d'aquariums grâce à différents mécanismes magnétiques. De tels procédés présentent cependant certains inconvénients. La force magnétique nécessaire au traitement de surface implique d'installer deux éléments de part et d'autre de la paroi du bassin aquatique à traiter. Cet agencement oblige de plus à disposer d'un accès extérieur aisé pour les agencements et positions à nettoyer, ce qui n'est pas toujours le cas en pratique. La technique de traitement, notamment par mécanismes magnétiques, est bien souvent limitée à des parois relativement minces, ce qui exclut le traitement de grands bassins aquatiques, dont les parois peuvent atteindre plusieurs dizaines de centimètres d'épaisseur. Egalement, la mise en mouvement de l'élément magnétique fixé sur la paroi interne du bassin aquatique est engendrée par la mise en mouvement de l'élément externe, souvent par intervention humaine, excluant l'automatisation du procédé.

On connaît également des systèmes automatiques, comme par exemple tel que décrit dans la demande WO2006078921, qui décrit un système de nettoyage automatique pour aquarium. Le système de nettoyage est programmé pour effectuer le nettoyage de l'aquarium sur une base régulière sans nécessiter une intervention humaine durant le procédé de nettoyage. Le système de nettoyage est configuré pour se déplacer le long des parois latérales de l'aquarium afin de nettoyer lesdites parois lors de son déplacement. Un tel système est prévu pour des petits aquariums et des bassins de faibles volumes. Son action est restreinte au nettoyage des parois.

Le document US4709513 décrit un appareil permettant de retirer les éraflures ou griffures d'une surface telle qu'une plaque de verre, notamment une plaque incurvée comme par exemple un pare-brise de voiture.

Le document US5806463 décrit un aspirateur pour aquarium comportant un moyen d'entraînement permettant de commander le déplacement automatique le long de la surface à nettoyer.

Pour pallier ces différents inconvénients, l'invention prévoit différents moyens techniques.

### EXPOSE DE L'INVENTION

Tout d'abord, un premier objet de l'invention consiste à prévoir un système et procédé de traitement de parois de bassins aquatiques permettant un ponçage et un polissage de haute qualité optique des surfaces transparentes, sans nuire à l'environnement des êtres vivants dans le bassin.

Un autre objet de l'invention vise à prévoir un système ne requérant pas la présence d'un ou plusieurs plongeurs devant demeurer dans le bassin pendant toute la durée du traitement.

Encore un objet de l'invention vise à prévoir un procédé et un dispositif permettant de travailler en flux continu, sans engendrer de difficultés quant au dosage d'effort à appliquer.

Un autre objet de l'invention consiste à prévoir un dispositif de traitement de parois de bassins aquatiques ne nécessitant pas de déplacer les êtres vivants hors du bassin aquatique pendant le processus de polissage. Un autre objet de l'invention vise à prévoir un dispositif de traitement de parois de bassins aquatiques qui permet de conserver l'eau durant et à l'issue du processus de polissage. Encore un objet de l'invention permet de récupérer les particules issues des opérations de polissage. Enfin un autre objet de l'invention permet de traiter différentes configurations de parois de bassins aquatiques.

Pour ce faire, l'invention prévoit un système de traitement par polissage de parois internes de bassins aquatiques selon la revendication indépendante 1, qui comporte notamment au moins un réservoir de mélange abrasif et au moins une tête de traitement de surface en communication fluidique avec le réservoir de mélange abrasif, ainsi que des moyens permettant de déplacer la tête de traitement le long de la paroi à traiter, et des moyens permettant d'alimenter en flux sensiblement continu la tête de traitement en mélange abrasif, la tête de traitement comprenant une chambre de confinement dans laquelle un disque de traitement est agencé de façon rotative, le disque de traitement comportant un axe de rotation et d'alimentation creux relié aux moyens d'alimentation en mélange abrasif, le disque de traitement étant relié à un moteur de disque de traitement, et le disque de traitement portant une mousse de frottement. Un tel agencement permet de traiter des parois de grande surface de façon automatique ou semi-automatique avec intervention humaine de durée limitée dans le bassin. Une telle architecture permet de mettre en œuvre un polissage par frottement avec contact direct du disque contre la paroi à traiter. Le disque, avec sa mousse, est imbibé de particules abrasives, par un flux continu, rendant le disque abrasif. Le niveau d'usinage de la paroi à traiter peut être réglé : par l'intensité de l'effort de frottement entre le disque et la paroi, et /ou par la vitesse du disque, et/ou par la qualité plus ou moins abrasive des particules, et/ou par l'intensité du flux de ces particules. Un tel agencement permet d'effectuer un polissage efficace, bien dosé, aussi bien lors des phases de ponçage relativement intensif lorsqu'il faut supprimer des rayures relativement profondes mais également lors du polissage optique extrêmement fin permettant de restituer la transparence des parois internes en PMMA (poly méthacrylate de méthyle) des aquariums. Par ailleurs, pour bien gérer les paramètres permettant d'optimiser le polissage optique, la granulométrie des particules abrasives peut être adaptée, jusqu'à des particules très fines (par exemple de l'ordre du nanomètre). Une telle architecture de la chambre de confinement permet de mettre en place une interface de travail étanche et de récupérer les particules. Cela permet par ailleurs de gérer correctement les paramètres de polissage.

Egalement de manière avantageuse, le système de traitement comporte une chambre de confinement qui comprend un, ou plusieurs orifices de sortie en communication fluidique avec au moins un réservoir de mélange récupéré. Un tel agencement présente l'avantage de pouvoir récupérer le mélange utilisé.

De manière avantageuse, le système de traitement est doté de moyens permettant de déplacer la tête de traitement le long de la paroi à traiter qui comportent au moins un rail horizontal et un rail vertical.

De manière avantageuse, cet agencement constitue une mise en œuvre simple, peu coûteuse et facile à monter/démonter. Selon une variante avantageuse, le système de traitement comporte au moins un rail monté mobile.

Selon l'invention, le système de traitement comprend au moins une hélice de poussée de tête de traitement qui est disposée sur la tête de traitement, sensiblement à l'opposé de la chambre de confinement. Cet agencement permet d'ajuster la force de maintien de la tête de traitement contre la paroi à traiter.

Egalement de manière avantageuse, le système comporte un circuit de recirculation du mélange abrasif. Cela permet de réutiliser le mélange abrasif sur plusieurs cycles, jusqu'à saturation du mélange.

L'invention prévoit également un procédé de traitement par polissage de parois internes de bassins aquatiques selon la revendication indépendante 6, qui comprend notamment les étapes suivantes :
- une tête de traitement de surface est alimentée en mélange abrasif ;
- le mélange abrasif reçu est transmis dans une chambre de confinement de la tête de traitement ;
- un disque de traitement prévu dans la chambre de confinement s'imprègne du mélange abrasif reçu ;
- le disque de traitement en rotation traite la paroi interne par frottement du disque contre la paroi ;
- le mélange abrasif utilisé est rejeté ;
- la tête de traitement de surface est déplacée.

De manière avantageuse, le mélange abrasif récupéré est utilisé dans plusieurs cycles de traitement.

Selon l'invention, la pression s'exerçant à l'intérieur de la chambre de confinement est inférieure à la pression extérieure du milieu ambiant additionnée de la poussée de l'hélice s'exerçant sur la chambre de confinement.

De manière avantageuse, le réglage du différentiel de pression est prévu pour faciliter le déplacement de la tête de traitement sur la paroi en limitant les frottements, et cela à tous les niveaux de profondeur de travail, et en garantissant le confinement du mélange abrasif dans la chambre de confinement.

### DESCRIPTION DES FIGURES

Tous les détails de réalisation sont donnés dans la description qui suit, complétée par les figures 1 à 6, présentées uniquement à des fins d'exemples non limitatifs, et dans lesquelles :
- la figure 1 est une vue de face depuis l'intérieur d'un bassin aquatique d'un exemple de système de traitement de parois de bassins aquatiques selon l'invention ;
- la figure 2 est une vue de face d'une variante de réalisation du système de traitement de la figure 1;
- la figure 3 est une représentation schématique d'un second mode de réalisation de système de traitement, dans lequel la tête de traitement est présentée en coupe, et est complétée par les autres éléments du système de traitement de parois de bassins aquatiques selon l'invention ;
- la figure 4 est une vue arrière du second mode de réalisation de l'invention ;
- la figure 5 est une vue de dessus d'un exemple d'implantation du système selon l'invention ;
- la figure 6 est une représentation schématique des éléments constitutifs de la boîte de gestion et du poste de commande selon l'invention.

### DESCRIPTION DETAILLEE DE L'INVENTION

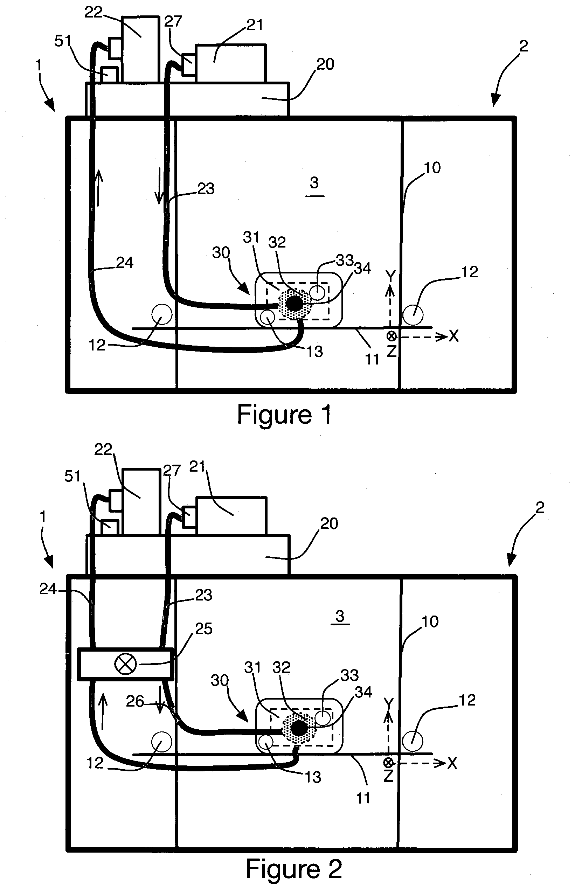

Les figures 1 et 2 illustrent un premier mode de réalisation d'un système de traitement par polissage de parois 3 internes de bassins aquatiques 2 selon l'invention.

### TÊTE DE TRAITEMENT

Tel que le représente la figure 1, la tête de traitement 30 comporte une chambre de confinement 31 permettant de coopérer de manière étanche avec la paroi 3 à traiter. Un disque de traitement 32 est agencé dans la chambre de confinement 31 et positionné pour permettre le polissage de la paroi 2 à traiter. Le disque de traitement 32 est en contact direct avec la paroi à traiter. Il agit par frottement contre celle-ci. Le disque de traitement 32 peut être entraîné en rotation par un moteur 33 du disque de traitement. Le disque de traitement 32 est monté sur un axe creux 34 à double fonction servant d'axe de rotation et de tube d'alimentation en mélange. L'axe 34 guide le mélange entrant jusqu'au disque de traitement 32, monté de façon à recevoir le mélange entrant. Lors du traitement, le disque est ainsi constamment imbibé de mélange abrasif 40 entrant. En position de travail, la chambre de confinement 31 est isolée du reste du bassin et permet de récupérer le mélange abrasif 41. Le mélange abrasif récupéré comprend les particules de PMMA (Polyméthacrylate de méthyle) extraites du polissage mélangées au mélange abrasif 40.

### ALIMENTATION CONTINUE

Dans les exemples illustrés par les figures 1 et 2, une plateforme 20 sert à supporter un réservoir de mélange abrasif 21 et un réservoir de mélange récupéré 22. La plateforme 20 est avantageusement disposée à l'extérieur du bassin 2 aquatique, par exemple au-dessus de ce dernier, tel que l'illustre la figure 1.

Le réservoir en mélange abrasif 21 est destiné à stocker le mélange abrasif 40 initial. Le réservoir de mélange récupéré 22 permet de stocker le mélange récupéré 41 suite à un cycle de polissage. Un tube d'alimentation en mélange abrasif 23 permet de relier le réservoir de mélange abrasif 21 à l'axe d'alimentation de mélange et de rotation 34. Un tube de retour de mélange abrasif 24 permet de relier la chambre de confinement 31 au réservoir de mélange récupéré 22. Une boîte de gestion 51 est avantageusement installée à proximité de la plateforme 20. La boîte de gestion 51 regroupe l'ensemble des informations exploitables par le boîtier de commande 50.La boîte de gestion 51 permet de recevoir et de traiter les instructions provenant du boîtier de commande 50 de l'utilisateur.

La figure 2 est une variante de réalisation du système décrit en relation avec la figure 1. Dans cette variante, le mode d'alimentation et de récupération du mélange peut être géré par un module de distribution en mélange abrasif 25. Selon le mode de sélection opéré, le module de distribution en mélange abrasif 25 permet d'intervertir les réservoirs d'alimentation 21 et de récupération 22.Cette caractéristique d'inversion des réservoirs 21 et 22 permet, à chaque fois qu'un réservoir est vide, d'utiliser l'autre réservoir pour assurer l'alimentation. Le système permet d'effectuer une pluralité de cycles de polissage. A chaque cycle, le taux de particules de PMMA du mélange 41 augmente. Lorsque le mélange atteint un taux de PMMA préalablement établi, le mélange usé est retiré du circuit et un nouveau réservoir de mélange abrasif est connecté au système. Par exemple, lorsque le réservoir d'alimentation 21 est vide, le réservoir de récupération 22 alimente à son tour la tête de traitement 30, cette fois avec un mélange mixte, composé d'abrasif et de particules de PMMA récupérées du ou des cycles précédents.

### SUPPORT ET DEPLACEMENT DE LA TETE DE TRAITEMENT

Selon le premier mode de réalisation illustré aux figures 1 et 2, le système 1 de traitement comporte différents éléments permettant d'assurer le support et la mobilité de la tête de traitement 30. Tel qu'illustré, le système 1 comporte un rail horizontal 11 et deux rails verticaux 10. Ces derniers peuvent être fixés au sol du bassin et en surface, sur des zones de fixation disponibles à proximité de la paroi 3 à traiter. Le rail horizontal 11 est conçu afin de permettre la mobilité de la tête de traitement 30 en effectuant des mouvements de translation selon l'axe X. Le déplacement en translation de la tête de traitement 30 selon l'axe X est assuré par un moteur 13 de déplacement horizontal prévu dans la tête de traitement 30. Pour faciliter la translation, des roulettes sont avantageusement agencées entre la tête de traitement 30 et le rail horizontal 11. Le rail horizontal 11 est lui-même monté mobile le long de l'axe Y. La mobilité du rail horizontal 11 sur l'axe Y est permise par deux moteurs 12 de déplacement vertical. Grâce à ces deux types de déplacements, la tête de traitement 30 peut être déplacée sur toute la surface couverte par l'envergure des rails 10 et 11.

### SECOND MODE DE REALISATION

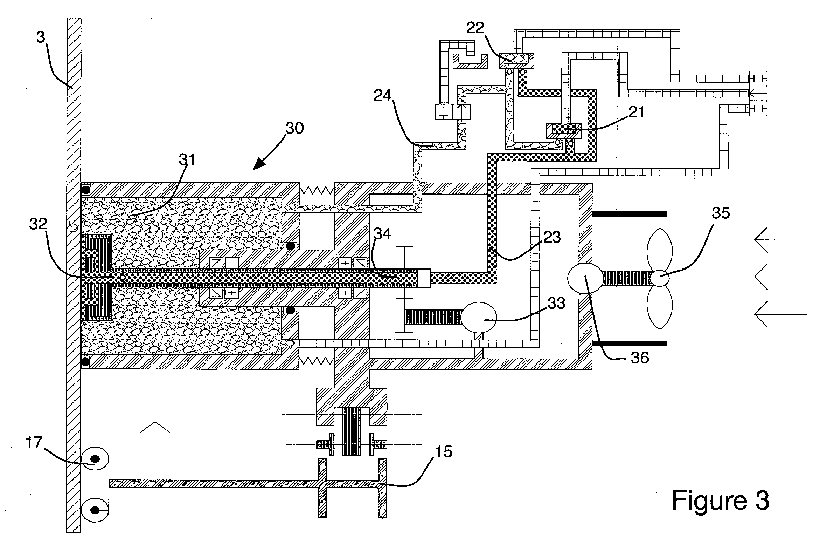

Les figures 3 à 5 illustrent un second mode de réalisation de l'invention. Ce mode de réalisation prévoit avantageusement une gestion de mélange abrasif à l'aide de réservoirs agencés en tandem, à savoir un tandem pour chaque granulométrie. Il y a de préférence autant de réservoirs tandem qu'il y a de granulométries. Le volume de chaque réservoir conditionne la fréquence de remplacement du mélange abrasif 40. Il est possible d'utiliser une seule granulométrie, ce qui implique des vitesses de translation sur l'axe (x) et (y) spécifique et une répétition de passage par unité de surface adapté. S'il n'y a aucune translation sur l'axe (x) et (y) de la tête de traitement 30 jusqu'à la rénovation complète de l'unité de surface, il faut alors garantir un équilibre thermique entre le mélange abrasif 40 et la surface en PMMA traitée qui peut subir dans ce cas un échauffement superficiel et ponctuel non conforme. Si plusieurs granulométries de mélanges abrasifs 40 sont utilisées, on peut prévoir une phase de rinçage des circuits, préalable au changement des réservoirs tandem.

### TÊTE DE TRAITEMENT

Tel qu'illustré, le module tête de traitement est constitué de préférence de deux têtes de traitement 30 ou de multiples de deux. Les éléments tournants principaux sont l'hélice 35 de poussée et le disque de traitement 32. Les têtes de traitement 30 sont avantageusement montées en contra-rotation l'une par rapport à l'autre, afin d'annuler le couple de rotation. Ce mode de réalisation est spécifiquement conçu afin de limiter les contraintes sur les portiques et le dispositif de guidage de l'axe (x) et (y).

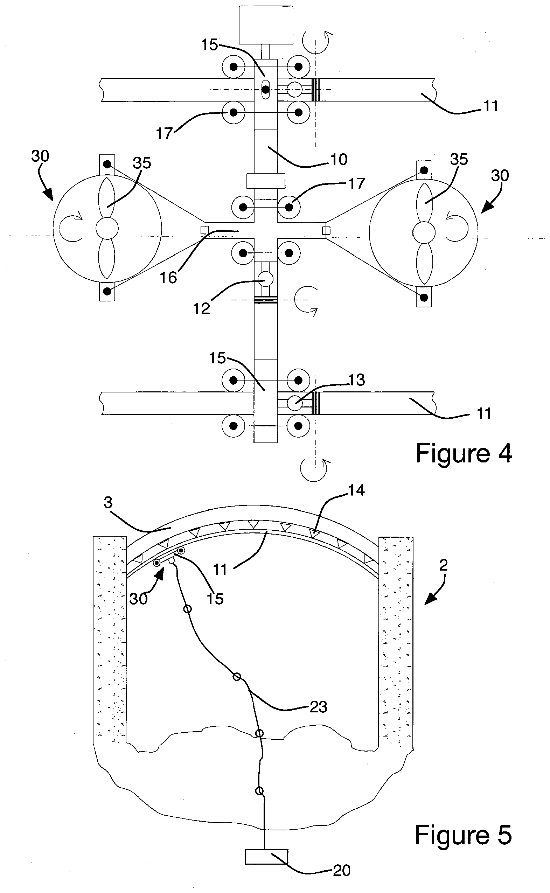

Dans cette perspective l'ensemble têtes de traitement 30 et chariots moteur (y) (décrits ultérieurement en relation avec la figure 4) sont en flottabilité neutre dans l'eau, pour limiter les contraintes sur les portiques et faciliter les mouvements de translations. Le rôle de la tête de traitement 30 est primordial puisque celle-ci est en contact direct avec la paroi 3 en PMMA à traiter et permet de réaliser le polissage du matériau afin d'en gommer les différentes rayures et opacités. Le châssis de la tête de traitement 30 peut se déplacer librement sur son axe (z) de quelques centimètres en avant et en arrière. Cela permet à l'hélice 35 de poussée de tête de traitement de plaquer la chambre de confinement 31 sur le panneau ou de la libérer. Cela permet aussi de réaliser les différentes phases du cycle sans générer de contrainte mécanique sur les éléments de structure des rails, et ce tout en conservant un parfait guidage sur les trois axes. Pour optimiser le processus, selon l'invention, la poussée exercée par l'hélice 35, additionnée à la pression extérieure du milieu ambiant, est légèrement supérieure à la force opposée résultant de la pression interne dans la chambre de confinement 31. De plus la pression dans la chambre de confinement 31 est inférieure à la pression extérieure du milieu ambiant additionnée de la poussée de l'hélice s'exerçant sur cette chambre. La tête de traitement 30 est mise en mouvement le long de l'axe (y) grâce au chariot moteur vertical 16. La tête de traitement 30 descend sous l'eau, son chariot moteur vertical 16 roule sur le rail vertical 10. La tête de traitement 30 s'immobilise quelques dizaines de cm sous la surface. L'eau du bassin pénètre dans la chambre de confinement 31. Des clapets anti-retour du disque de traitement et du tuyau d'injection d'air empêchent l'eau d'entrer dans les circuits. Le distributeur du tuyau d'échappement est en position purge. L'hélice 35 de poussée de tête de traitement, entrainée par un moteur 36 électrique, entre en rotation. Celle-ci génère une poussée permettant la translation de la tête de traitement 30 selon l'axe (z). Cette force de poussée produit dans un premier temps le plaquage de la mousse de frottement du disque de traitement 32 sur la paroi 3 en PMMA, dépassant par rapport au plan de joint de plaquage axial de la chambre de confinement 31. Cela génère l'écrasement partiel de la mousse de frottement et la compression d'éventuels ressorts du plateau de traitement 32, ce qui entraine dans un second temps le plaquage de la chambre de confinement 31 sur la paroi 3 en PMMA. La densité et la mémoire de forme de la mousse de frottement, ainsi que la raideur d'éventuels ressorts de compression du plateau de traitement 32 contribuent à réaliser un contact et une force de frottement de la mousse du plateau de traitement 32 relativement constants même lors de variations de poussée de l'hélice 35 sur la chambre de confinement 31. L'hélice 35 génère une poussée statique constante et réglable sur la chambre de confinement 31 une fois celle-ci plaquée sur la paroi 3. La chambre de confinement 31 possède un joint à sa périphérie, monté en portée axiale afin de rendre le plaquage suffisamment étanche sur la paroi 3. Cela permet d'éviter les fuites de mélange abrasif 40 et les fuites d'air au moment des purges et des phases de rinçage. La chambre de confinement 31 peut éventuellement être équipée sur sa paroi extérieure de ressorts amortisseurs et d'un dispositif de réglage permettant de régler la position de son plan de joint de plaquage axial par rapport à la mousse de frottement du disque de traitement 32.

Le distributeur d'air comprimé passe en positon purge. L'air pénètre dans la chambre de confinement 31 et chasse l'eau qui s'échappe par le tuyau d'échappement et retourne dans le réservoir de vidange. Une fois la purge terminée, l'admission de mélange abrasif 40 peut commencer. Le distributeur du tuyau d'échappement passe en position retour sur le réservoir N°2 du premier tandem de réservoir. Le distributeur d'air comprimé passe en position alimentation en mélange abrasif. L'air sous pression est injecté dans le réservoir N°1 du premier tandem de réservoir, contenant le mélange abrasif de la première granulométrie.

Le mélange abrasif 40 descend dans le tube d'alimentation 23 et traverse la garniture mécanique d'étanchéité dynamique qui équipe l'arbre creux du disque 32 de polissage portant la mousse de frottement. Le mélange abrasif 40 remplit la chambre centrale de la mousse, puis les canaux de distribution périphériques. Le moteur électrique d'entrainement du disque 32 de traitement entre en rotation. L'opération de traitement de la paroi 3 en PMMA commence. La vitesse du disque 32 porte mousse de polissage est variable de façon à permettre la sélection d'une vitesse bien adaptée aux paramètres opératoires tels que la qualité de l'agent abrasif présent dans le mélange abrasif 40, la nature des imperfections à polir, la vitesse de déplacement de la tête, etc. Le mélange abrasif 40 est projeté contre la paroi 3 à polir sous l'effet de la force centrifuge et du débit de mélange abrasif 40 produit par le circuit d'alimentation. Peu à peu, tout le volume de la chambre de confinement 31 est rempli de mélange abrasif 40 qui s'échappe ensuite par le tuyau d'échappement et retourne dans le réservoir N°2 du premier tandem de réservoirs. Une couche de mélange abrasif 40 est maintenue entre la mousse et la paroi 3, résultant de la poussée engendrée par l'hélice 35 sur le plateau de polissage et par le débit de mélange abrasif 40 produit par la pression de l'air dans le réservoir N°1.

Quelques secondes après l'entrée en rotation du disque 32 de polissage, la translation de la tête de traitement 30 sur l'axe (x) commence. Cette translation est produite par les galets moteurs du rail vertical qui roule sur les rails horizontaux. L'abrasion produite charge le mélange abrasif 40 de particules de PMMA. Ceci implique de prévoir un volume de délestage dans les réservoirs tandems pour permettre la saturation progressive du mélange 41 en particules de PMMA. Il faut également contrôler l'épaississement progressif du mélange abrasif car une viscosité trop importante de celui-ci dû au chargement en particules de PMMA pourrait créer un échauffement excessif de la paroi. Lorsque le réservoir N°1 est quasiment vide, le distributeur d'air comprimé stoppe l'injection d'air et alimente le réservoir N°2. La présence des clapets anti-retour sur les réservoirs permet l'alternance de circulation du mélange abrasif 40. Ainsi, le réservoir N°2 devient le réservoir d'alimentation et le N°1 réservoir de retour. C'est pour cela que l'on parle de réservoirs tandem pour chaque granulométrie.

Le système de recyclage de mélange abrasif 40 permet :
- un débit important de mélange 40 dans la chambre 31 de confinement, limitant ainsi l'échauffement ;
- une couche interface suffisamment épaisse pour favoriser une abrasion la plus régulière et la plus efficace possible ;
- une optimisation de la durée d'utilisation du mélange par unité de surface avant que sa viscosité soit non conforme.

### ALIMENTATION CONTINUE

Toujours en relation avec les figures 3 et 4, le module plateforme de surface fixe représente la station logistique de la machine. C'est ce module qui stocke et distribue tous les mélanges vers les têtes de traitement 30. Ce module distribue également le courant électrique à tous les moteurs et systèmes qui en ont besoin. Il produit l'air comprimé et porte également la centrale de pilotage du module poste de commande. Dans l'exemple illustré, ce module est constitué des sous-ensembles suivants : un châssis sur roulette, une connexion pour le courant du secteur, un ou plusieurs transformateurs de courant électrique, un compresseur d'air basse pression et sa cuve, un ensemble de réservoirs de mélanges abrasifs (réservoirs tandems), un réservoir de purge, un ensemble de distributeurs pneumatiques, un ensemble de distributeurs eau et mélange abrasif, un dispositif de régulation pneumatique et hydraulique, une centrale de pilotage, une connexion arrivée d'eau du réseau. La plateforme 20 est de préférence positionnée dans les locaux techniques du bassin ou de l'aquarium, le plus près possible de l'accès à la surface au dessus de la paroi 3 en PMMA à traiter. Le châssis sur roulettes de ce module permet cette mise en place. En effet il est souhaitable de réduire au maximum les longueurs des câbles et des tuyaux, raccordés aux modules installés sur la paroi 3 en PMMA. Une fois l'emplacement de la plateforme déterminé, l'opérateur procède aux branchements des câbles et des tuyaux sur la boîte de connexions des rails horizontaux. La plateforme 20 n'est plus amenée à être déplacée durant la durée du chantier. La plateforme 20 est également branchée au secteur électrique et au réseau d'eau courante. Lorsque tous les modules sont opérationnels, les opérations peuvent commencer. L'opérateur, grâce à son boîtier de commande 50, déclenche la mise sous tension générale de la plateforme 20. Les réservoirs tandem ont été remplis de mélange abrasif 40 au préalable. Le réservoir de purge et de rinçage est vide. L'opérateur déclenche la mise en marche du compresseur d'air basse pression afin qu'il mette en pression la cuve tampon. Une fois la pression de service atteinte, le système est opérationnel. La boîte de gestion 51, sous les ordres de l'opérateur, alimente les circuits d'asservissement des distributeurs grâce à sa carte de pilotage dédiée. La distribution des mélanges 40 vers les têtes de traitement 30 commence, ainsi que la collecte des paramètres physiques permettant de surveiller le système. L'alimentation en courant de puissance est assurée par le transformateur et la carte de pilotage dédiée pour alimenter tous les moteurs électriques de la machine. Dans cet exemple de mise en oeuvre, le procédé de polissage est décrit avec une approche manuelle. En variante, plusieurs des étapes présentées peuvent également être mises en oeuvre selon une approche automatisée. Selon le second mode de réalisation de l'invention, la mobilité des têtes de traitement 30 est assurée par un système de rails comprenant deux paires de rails agencées sensiblement perpendiculairement. Dans ce qui suit, les rails horizontaux 11 et les rails verticaux 10 seront décrits, en relation avec les figures 4 et 5.

### Les rails horizontaux

Ce module représente les éléments de guidage des rails verticaux 10 et des têtes de traitement 30 sur l'axe (x) en permettant leur translation sur cet axe de manière à ce que les rails verticaux soient sensiblement perpendiculaires à la surface de l'eau. Dans l'exemple illustré, ce module est constitué par trois ensembles d'éléments, soit le rail de guidage de surface, le rail de guidage de fond, la boîte de connexion.

### Le rail de guidage surface :

Cet ensemble d'éléments est installé par des opérateurs plongeurs sur la paroi 3 de PMMA à traiter. Il est installé quelques centimètres au-dessus de la surface de l'eau du bassin. Dans l'exemple illustré, l'ensemble comporte les éléments suivants : une pluralité de ventouses de support pneumatique et une pluralité de tronçons de rails. Les ventouses 14 support sont de préférence positionnées de manière équidistante par rapport à l'extrémité haute de la paroi 3 en PMMA. Elles sont reliées entre elles par un tuyau pneumatique du circuit pneumatique de fixation. Les ventouses14 de support sont branchées en parallèle sur le circuit pneumatique : leur mise en oeuvre est indépendante. Un petit boitier de connexion pneumatique est intégré à la première ventouse support pour distribuer l'air comprimé au réseau ventouses. Cette ventouse est dite « ventouse nourrice ».Ainsi par le jeu du delta de pression généré par le circuit pneumatique dans la chambre sèche de la ventouse, le plaquage de celle-ci sur la paroi 3 est très puissant. Un clapet anti retour sur la ventouse limite les problèmes de décrochement en cas de fuite éventuelle du circuit. Une fois ce réseau de ventouses installé, les rails tronçons peuvent être mis en place. Les rails tronçons sont par exemple des plaques de PEHD (Polyéthylène haute densité) ou d'une matière plastique ayant une bonne flexibilité sans risque de rupture, venant épouser le rayon de courbure éventuel de la paroi 3 de PMMA à traiter. A titre d'exemple, la longueur des rails tronçon peut être comprise entre 0.5 et 2 mètres de longueur selon les configurations de bassin d'aquarium. Les rails tronçon se fixent sur les ventouses d'encrage, à raison de deux ou trois points d'encrage. Une bride de fixation permet de fixer les rails les uns aux autres. On utilise de préférence un dispositif de pré-alignement au cordeau qui est mis en place sur le panneau de PMMA au moment de la pose des ventouses support. Les diamètres de perçage des vis de fixation sur les rails tronçon sont tels qu'ils permettent d'ajuster les rails les uns par rapport aux autres. Le repositionnement des ventouses d'ancrage est possible au fur et à mesure du montage des rails tronçons. Lorsque les dimensions de la paroi 3 en PMMA à traiter ne permettent pas d'utiliser uniquement des longueurs standard de rails tronçons, un rail tronçon dit « de raccord » est utilisé. Ce rail tronçon est une plaque sur mesure permettant l'ajustage. Il peut être confectionné sur site.

### Le rail de guidage fond :

Cet ensemble d'éléments est installé par des opérateurs plongeurs sur la partie la plus basse du panneau de PMMA. Cet ensemble comporte les éléments suivants : une pluralité de ventouses de support pneumatiques et une pluralité de tronçons de rails. Les opérations de mise en place sont similaires à celles du rail de surface. Une ventouse nourrice, connectée à la ventouse nourrice de surface, est utilisée. Les ventouses support sont positionnées de manière équidistante par rapport à l'extrémité basse de la paroi 3 de PMMA.

### La boite de connexion :

Dans l'exemple illustré, une boîte de connexion est positionnée au sec très près de l'accès à la surface de l'eau du bassin et, si possible, positionnée également approximativement au milieu du plan d'eau et du côté opposé à la paroi 3 de PMMA. Cette boîte de connexion permet de raccorder toutes les alimentations et les retours du module plateforme de surface fixe au module portique vertical et aux têtes de traitement 30 de la machine. Elle joue un rôle de point d'ancrage et de pivot. En effet les câbles et tuyaux connectés depuis la boîte vers le portique sont très flexibles et sont équipés de flotteurs afin de suivre le déplacement du portique vertical en se déployant sur la surface de l'eau, sans provoquer d'emmêlement et de contrainte excessive. Elle permet également d'alimenter en air comprimé les circuits de fixation des ventouses.

### Les rails verticaux

Ce module représente les éléments de guidage des têtes de traitement 30 sur l'axe (y) mais également les éléments moteur de l'axe (x) et (y). Dans l'exemple illustré, ce module est constitué par les ensembles suivants : le rail de guidage, les chariots moteurs (x), le chariot moteur (y), les boitiers connecteurs, et le rail de guidage. Cet ensemble constitue le guidage et le chemin de roulement de l'axe (y). Il est installé par les opérateurs plongeurs après la pose des rails horizontaux. Dans l'exemple illustré, il comporte les éléments suivants : une pluralité de tronçons de rails avec correcteur coaxial, une pluralité de tronçons de rails, et une pluralité de tronçons de raccord. Après avoir pris en compte la profondeur du bassin 2 et donc la longueur du segment entre l'axe médian du rail de guidage surface et l'axe médian du rail de guidage fond, il est possible de réaliser l'assemblage du rail de guidage. Comme pour le portique horizontal, les rails sont par exemple des plaques de plastique dont la flottabilité est neutre (pour faciliter le montage et les efforts sur les rails horizontaux). Ces plaques sont assemblées entre elles grâce à des brides et des entretoises. Le rail de guidage est un assemblage double plan, avec des entretoises cylindriques afin d'obtenir une rigidité importante sur des longueurs qui peuvent représenter plusieurs mètres. Les rails tronçon avec correcteur coaxial possèdent un trou oblong : il est le premier rail tronçon depuis le haut du bassin 2. Ce trou oblong permet de le fixer au chariot moteur (x) du rail de surface et permet de corriger des défauts d'alignement des rails du portique horizontal lors des translations sur l'axe (x). Les raccords, comme pour les rails horizontaux 11, assurent le raccordement sur mesure si les rails tronçons standard ne permettent pas d'obtenir la hauteur voulue. Ils peuvent être ajustés sur site.

### Les chariots moteurs (x) :

Dans l'exemple illustré, l'ensemble est constitué des deux chariots moteurs de l'axe (x) qui permettent la translation du portique sur l'axe (x). Le premier est installé sur le rail de surface et le deuxième sur le rail de fond. Le rail de guidage est fixé en haut sur le premier chariot moteur et en bas sur le deuxième. Dans l'exemple illustré, les chariots moteurs (x) comportent les éléments suivants : un châssis, des galets de guidage 17, un moteur et galet moteur, un système de réglage et des connexions étanches. Le châssis du chariot permet la fixation et la rotation de quatre galets de guidage 17. Un axe de fixation permet le raccordement du rail tronçon avec connecteur coaxial sur le chariot du haut. Les galets de guidage 17 roulent par paires, soit deux sur la tranche haute et deux sur la tranche basse des plaques des rails tronçons horizontaux. Ainsi ils solidarisent le châssis sur le rail mais permettent également sa translation horizontale. Le châssis est équipé d'un moteur électrique et d'un réducteur dans un caisson étanche. En sortie de réducteur, l'axe est équipé d'un galet moteur. Ce galet moteur est par exemple une roue caoutchoutée qui entraine le chariot et donc le rail vertical. En translation sur l'axe (x). Le chemin de roulement de ce galet moteur est la face externe des plaques des rails horizontaux 11. Le chariot moteur (x) de la partie haute possède un support pour pouvoir fixer le boitier connecteur. Le groupe motoréducteur et le galet moteur sont montés sur un bâti réglable afin de pouvoir modifier l'intensité de l'appui du galet moteur sur son chemin de roulement, et de générer une adhérence suffisante pour réaliser la translation. Les moteurs des chariots sont connectés à la boite de connexion dédiée aux chariots moteurs (x) grâce à des câbles équipés de connecteur étanche. Les deux chariots moteurs (x) sont de préférence toujours alimentés en même temps par la plateforme 20.

### Le chariot moteur (y) :

Dans l'exemple illustré, cet ensemble est constitué du chariot moteur de l'axe (y) qui permet la translation des têtes de traitement 30 sur l'axe (y). Il comporte les éléments suivants : un châssis, des galets de guidage, un moteur et galet moteur, un système de réglage, des connexions étanches. Le châssis du chariot moteur (y) comporte le même principe de guidage au niveau des galets 17 de guidage. Il solidarise le châssis sur le rail vertical et permet sa translation sur l'axe (y). Le chariot moteur (y) a le même système de mise en mouvement que les chariots (x), avec caisson étanche, motoréducteur, galet moteur et système de réglage du galet moteur, ainsi que des connectiques étanches pour son moteur. Le châssis du chariot moteur (y) a en plus des autres, des dispositifs de fixation de chaque coté sur le plan horizontal. Ces dispositifs permettent de fixer les têtes de traitement 30 de chaque coté. De plus ils permettent de régler l'angle de parallélisme des têtes de traitement 30 par rapport à la paroi 3 en PMMA, puis de les verrouiller dans la position choisie. Ce système permet de s'adapter à des rayons de courbure importants de la paroi 3.

### Les boitiers connecteurs :

Le châssis du chariot moteur (y) est équipé d'un boitier connecteur qui permet de connecter le circuit d'alimentation de son moteur de translation, mais également l'alimentation de tous les moteurs électriques des têtes de traitement 30 et les tuyaux des différents mélanges. Le boitier connecteur du chariot moteur (y) est connecté à la boite de connexion générale du portique horizontal qui se trouve au sec et qui est connectée à la plateforme 20.

### Le module poste de commande :

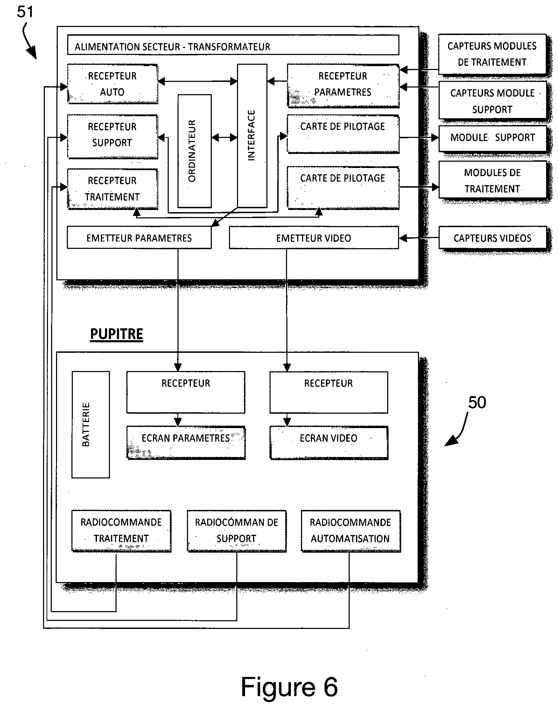

Tel qu'illustré à la figure 6, le rôle du module poste de commande est de donner à l'opérateur l'accès à l'ensemble des commandes du système et à la surveillance des paramètres. Ce module permet le pilotage manuel, semi-automatique ou automatique de la machine. Le boîtier de commande est installé du « coté sec » du panneau de PMMA à traiter. L'opérateur dispose ainsi d'un visuel en milieu sec du panneau, ceci lui permettant d'apprécier de façon optimum et en temps réel les résultats des opérations de traitement (le visuel étant bien moins précis en milieu immergé). De plus l'opérateur est bien moins éprouvé physiquement en milieu sec qu'en milieu immergé, et potentiellement plus en sécurité dans le cas de bassins 2 contenant des animaux dangereux. Ce module poste de commande est constitué par deux ensembles d'éléments en contact radio et filaire: soit un premier ensemble qui est un boîtier de commande 50, et un deuxième ensemble qui est la boîte de gestion 51. Le pupitre opérateur peut être déplacé grâce à ses roulettes, afin de suivre l'avancée du traitement le long de la paroi 3 en PMMA coté sec. Ce pupitre comporte trois radiocommandes, deux récepteurs, et deux écrans. La radiocommande de traitement communique par onde radio avec le récepteur « fonctions de traitement » situé dans la boîte de gestion 51 sur la plateforme 20. Elle permet à l'opérateur de mettre en œuvre manuellement les fonctions des modules immergés et installés sur la paroi 3 en PMMA à traiter. Ses fonctions sont par exemple la mise en mouvement des têtes de traitement 30 sur les trois axes plus ou moins rapidement, de faire tourner les hélices 35 de poussée et de faire varier leur vitesse de rotation afin de modifier et d'ajuster la poussée générée par celles-ci, et la mise en rotation des plateaux de polissage et la variation de leur vitesse de rotation si nécessaire. La radiocommande du support communique par onde radio avec le récepteur « fonctions de support» situé dans la boîte de gestion 51 sur la plateforme 20. Elle permet de mettre en œuvre manuellement les fonctions du module de la plateforme 20 qui alimente en courant continu basse tension, en mélange abrasif 40, en air comprimé et en eau le/les rail(s) vertical(aux) et les têtes de traitement 30.

Les fonctions de la radiocommande sont par exemple le changement de position des distributeurs pneumatiques, le changement de position des distributeurs de purges et retours, la modification de la pression dans les circuits, et la mise sous tension des circuits électriques machine. La radiocommande des fonctions automatiques communique par onde radio avec le récepteur « fonctions automatiques » situé dans la boîte de gestion 51 sur la plateforme 20. Elle permet à l'opérateur de déclencher des phases de fonctionnement automatique sur les modules immergés et sur la plateforme 20. Le récepteur de paramètres reçoit par onde radio les informations de la boîte de gestion 51 et affiche les paramètres suivants, en temps réel, sur l'écran dédié : la pression des circuits d'air comprimé, la pression des circuits d'alimentation en mélange abrasif 40, le niveau des réservoirs tandems, la poussée des hélices 35, la vitesse des plateaux de polissage, la vitesse de déplacement sur l'axe (x) et (y), la température du mélange abrasif 40 dans la chambre de confinement 31, la température du mélange abrasif 40 dans les réservoirs 21 et 22, la viscosité du mélange abrasif 40, et l'état des circuits électriques. Le récepteur vidéo reçoit par ondes radios les signaux vidéo de la boîte de gestion 51 et affiche les images sur l'écran dédié. Cet écran vidéo permet à l'opérateur de visualiser certaines anomalies ainsi que les interactions possibles avec les éléments vivants du milieu d'intervention. La boîte de gestion 51 se trouve de préférence sur la plateforme 20. C'est le cœur du module poste de commande. C'est là que toutes les informations sont centralisées et exploitées. Dans l'exemple illustré, la boîte de gestion 51 comporte quatre récepteurs, deux émetteurs, et un ordinateur. Les ordres de commande, envoyés par l'opérateur à l'aide des radiocommandes du pupitre, sont reçus par les récepteurs de support, de traitement, d'automatismes, situés dans la boîte de gestion 51. Le récepteur de traitement communique directement avec la carte module de traitement qui va permettre de faire varier le courant de puissance des moteurs de translation de l'axe (x) et (y), mais aussi ceux des hélices 35 et des plateaux de polissage. Le récepteur support communique directement avec la carte module support sur la plateforme 20 et va permettre d'actionner des servocommandes agissant sur les distributeurs d'air comprimé, de mélange abrasif 40, et de mise sous tension des divers circuits. Le récepteur automatisme communique avec l'interface de l'ordinateur de la boîte de gestion 51. Celui-ci va prendre en compte le pilotage partiel ou total de la machine, selon le choix de l'operateur. L'ordinateur communique ensuite avec les cartes de pilotage par l'intermédiaire de l'interface. Le récepteur des paramètres reçoit par liaison radio ou filaire les informations en provenance des capteurs des différents paramètres. Ces capteurs sont placés en différents points du système selon qu'ils indiquent des pressions, des vitesses, des températures, des débits, etc. Le récepteur des paramètres communique avec l'interface de l'ordinateur qui peut utiliser ces informations lorsqu'il pilote la machine en mode automatique. L'ordinateur et l'interface communiquent également les paramètres à l'émetteur des paramètres pour que l'opérateur puisse les visualiser sur l'écran dédié. Les capteurs vidéo transmettent leurs signaux à l'écran vidéo du boîtier de commande 50 par l'intermédiaire de l'émetteur vidéo. L'alimentation électrique du poste de commande sera assurée par des batteries pour le boîtier de commande 50, et par le secteur avec transformateur pour la boîte de gestion 51. Toutes les alimentations électriques de puissance et d'asservissement passent avantageusement par la boîte de gestion 51.

Numéros de référence employés sur les figures

### Bassin

- 1: Système de traitement de parois internes de bassins aquatiques
- 2: Bassin aquatique
- 3: Paroi à traiter

### Support et déplacement de la tête de traitement

- 10: Rail vertical
- 11: Rail horizontal
- 12: Moteur de déplacement vertical
- 13: Moteur de déplacement horizontal
- 14: Ventouses de fixation
- 15: Chariot moteur horizontal
- 16: Chariot moteur vertical
- 17: Galets de guidage

### Alimentation continue

- 20: Plateforme
- 21: Réservoir de mélange abrasif
- 22: Réservoir de mélange récupéré
- 23: Tube d'alimentation en mélange abrasif
- 24: Tube de retour de mélange abrasif
- 25: Module de distribution en mélange abrasif
- 26: Tubes aller-retour
- 27: Compresseurs

### Tête de traitement

- 30: Tête de traitement
- 31: Chambre de confinement
- 32: Disque de traitement
- 33: Moteur du disque du traitement
- 34: Axe d'alimentation de mélange et de rotation
- 35: Hélice de poussée de tête de traitement
- 36: Moteur d'hélice

### Mélanges

- 40: Mélange abrasif
- 41: Mélange abrasif récupéré

### Boîtier de commande

- 50: Boîtier de commande
- 51: Boîte de gestion

## Revendications

1. Système de traitement par polissage de parois internes de bassins aquatiques (1) comportant au moins un réservoir (21) de mélange abrasif et au moins une tête de traitement (30) de surface en communication fluidique avec le réservoir (21) de mélange abrasif, des moyens (10, 11) permettant de déplacer la tête de traitement le long de la paroi (3) à traiter, et des moyens
permettant d'alimenter en flux sensiblement continu la tête de traitement en mélange abrasif, la tête de traitement (30) comprenant une chambre de confinement (31) dans laquelle un disque de traitement (32) est agencé de façon rotative, le disque de traitement (32) comportant un axe (34) de rotation et d'alimentation creux relié aux moyens d'alimentation en mélange abrasif, le disque de traitement étant relié à un moteur (33) de disque de traitement et portant une mousse de frottement, le disque, avec sa mousse, étant imbibé de particules abrasives, par un flux continu, rendant le disque abrasif,
**caractérisé en ce qu'**au moins une hélice (35) de poussée de tête de traitement est disposée sur la tête de traitement, sensiblement à l'opposée de la chambre de confinement,
et **en ce que**, en fonctionnement, la poussée exercée par l'hélice (35), additionnée à la pression extérieure du milieu ambiant, est légèrement supérieure à la force opposée résultant de la pression interne dans la chambre de confinement (31), permettant qu'une couche de mélange abrasif (40) soit maintenue entre la mousse et la paroi (3).

2. Système de traitement selon la revendication 1, dans lequel la chambre de confinement (31) comprend au moins un orifice de sortie en communication fluidique avec au moins un réservoir (22) de mélange récupéré.

3. Système de traitement selon l'une des revendications précédentes, dans lequel les moyens (10, 11) permettant de déplacer la tête de traitement (30) le long de la paroi à traiter comportent au moins un rail horizontal (11) et un rail vertical (10).

4. Système de traitement selon la revendication 3, dans lequel au moins un des rails est monté mobile.

5. Système de traitement selon l'une des revendications précédentes, comprenant un circuit de recirculation du mélange abrasif.

6. Procédé de traitement par polissage de parois internes de bassins aquatiques, mettant en œuvre le système de traitement selon l'une quelconque des revendications 1 à 5, comprenant les étapes suivantes :
- la tête de traitement de surface (30) est alimentée en mélange abrasif (40) ;
- le mélange abrasif (40) reçu est transmis dans la chambre de confinement (31) de la tête de traitement ;
- le disque de traitement (32) portant une mousse de frottement prévu dans la chambre de confinement s'imprègne du mélange abrasif (40) reçu et le disque, avec sa mousse, est imbibé de particules abrasives, par un flux continu, rendant le disque abrasif ;
- le disque de traitement (32) en rotation traite une des parois internes (3) (2) par frottement du disque contre la paroi ;
- le mélange abrasif (40) utilisé est rejeté ;
- la tête de traitement de surface (30) est déplacée sur la paroi ;
**caractérisé en ce que** la au moins une hélice (35) de poussée de tête de traitement, disposée sur la tête de traitement, sensiblement à l'opposée de la chambre de confinement génère une poussée, et **en ce que** cette poussée, additionnée à la pression extérieure du milieu ambiant, est légèrement supérieure à la force opposée résultant de la pression interne dans la chambre de confinement (31), permettant qu'une couche de mélange abrasif (40) soit maintenue entre la mousse et la paroi (3).

7. Procédé de traitement selon la revendication 6, dans lequel le mélange abrasif récupéré (41) est utilisé dans plusieurs cycles de traitement.

8. Procédé de traitement selon la revendication 6, dans lequel le réglage du différentiel de pression est prévu pour faciliter le déplacement de la tête de traitement (30) sur la paroi en limitant les frottements, et cela à tous les niveaux de profondeur de travail de la tête de traitement (30), tout en garantissant le confinement du mélange abrasif dans la chambre de confinement (31).

## Patentansprüche

1. System zum Behandeln durch Polieren von Innenwänden von Wasserbecken (1), aufweisend mindestens einen Vorratsbehälter (21) für Schleifgemisch und mindestens einen Flächenbehandlungskopf (30), der in Fluidverbindung mit dem Vorratsbehälter (21) für Schleifgemisch steht, Einrichtungen (10, 11), die es ermöglichen, den Behandlungskopf entlang der zu behandelnden Wand (3) zu bewegen, und Einrichtungen, die es ermöglichen, dem Behandlungskopf einen im Wesentlichen kontinuierlichen Strom Schleifgemisch zuzuführen, wobei der Behandlungskopf (30) eine Einschlusskammer (31) umfasst, in der eine Behandlungsscheibe (32) drehbar gelagert ist, wobei die Behandlungsscheibe (32) eine hohle Dreh- und Zuführachse (34) aufweist, die mit den Schleifgemischzuführeinrichtungen verbunden ist, wobei die Behandlungsscheibe mit einem Behandlungsscheibenmotor (33) verbunden ist und einen Scheuerschaumstoff trägt, wobei die Scheibe mit ihrem Schaumstoff durch einen kontinuierlichen Strom mit Schleifpartikeln getränkt wird, welche die Scheibe schleifend machen,
**dadurch gekennzeichnet, dass** mindestens ein Behandlungskopfschubpropeller (35) am Behandlungskopf angeordnet ist, im Wesentlichen entgegengesetzt zur Einschlusskammer,
und dass, während des Betriebs, der vom Propeller (35) ausgeübte Schub, addiert zum Außendruck des Umgebungsmilieus, etwas größer als die Gegenkraft ist, die aus dem Innendruck in der Einschlusskammer (31) resultiert, was ermöglicht, dass eine Schleifgemischschicht (40) zwischen dem Schaumstoff und der Wand (3) gehalten wird.

2. Behandlungssystem nach Anspruch 1, bei dem die Einschlusskammer (31) mindestens eine Austrittsöffnung umfasst, die in Fluidverbindung mit einem Vorratsbehälter (22) für rückgewonnenes Gemisch steht.

3. Behandlungssystem nach einem der vorhergehenden Ansprüche, bei dem die Einrichtungen (10, 11), die es ermöglichen, den Behandlungskopf (30) entlang der zu behandelnden Wand zu bewegen, mindestens eine horizontale Schiene (11) und eine vertikale Schiene (10) aufweisen.

4. Behandlungssystem nach Anspruch 3, bei dem mindestens eine der Schienen bewegbar angebracht ist.

5. Behandlungssystem nach einem der vorhergehenden Ansprüche, das einen Rückführungskreis für das Schleifgemisch umfasst.

6. Verfahren zum Behandeln durch Polieren von Innenwänden von Wasserbecken, welches das Behandlungssystem nach einem der Ansprüche 1 bis 5 einsetzt, umfassend die folgenden Schritte:
- dem Flächenbehandlungskopf (30) wird Schleifgemisch (40) zugeführt;
- das erhaltene Schleifgemisch (40) wird in die Einschlusskammer (31) des Behandlungskopfs weitergeleitet;
- die einen Scheuerschaumstoff tragende Behandlungsscheibe (32), die in der Einschlusskammer vorgesehen ist, saugt sich mit dem erhaltenen Schleifgemisch (40) voll, und die Scheibe wird mit ihrem Schaumstoff durch einen kontinuierlichen Strom mit Schleifpartikeln getränkt, welche die Scheibe schleifend machen;
- die sich drehende Behandlungsscheibe (32) behandelt eine der Innenwände (3) (2) durch Scheuern der Scheibe gegen die Wand;
- das verwendete Schleifgemisch (40) wird ausgestoßen;
- der Flächenbehandlungskopf (30) wird auf der Wand bewegt;
**dadurch gekennzeichnet, dass** der mindestens eine Behandlungskopfschubpropeller (35), der am Behandlungskopf im Wesentlichen entgegengesetzt zur Einschlusskammer angeordnet ist, einen Schub erzeugt, und dass dieser Schub, addiert zum Außendruck des Umgebungsmilieus, etwas größer als die Gegenkraft ist, die aus dem Innendruck in der Einschlusskammer (31) resultiert, was ermöglicht, dass eine Schleifgemischschicht (40) zwischen dem Schaumstoff und der Wand (3) gehalten wird.

7. Behandlungsverfahren nach Anspruch 6, bei dem das zurückgewonnene Schleifgemisch (41) in mehreren Behandlungsdurchgängen verwendet wird.

8. Behandlungsverfahren nach Anspruch 6, bei dem die Regelung der Druckdifferenz vorgesehen ist, um das Bewegen des Behandlungskopfes (30) auf der Wand zu erleichtern, indem das Scheuern begrenzt wird, und dies auf allen Arbeitstiefen des Behandlungskopfs (30), wobei gleichzeitig der Einschluss des Schleifgemisches in der Einschlusskammer (31) gewährleistet wird.

## Claims

1. System for polishing treating internal walls of aquatic enclosures (1) comprising at least one abrasive mixture tank (21) and at least one surface treatment head (30) in fluid communication with the abrasive mixture tank (21), means (10, 11) for moving the treatment head along the internal wall (3) to be polished, and a supply for supplying an abrasive mixture to the treatment head with a substantially continuous flow, wherein the treatment head (30) comprises a containment chamber (31) in which a treatment disc (32) is rotatably arranged, the treatment disc (32) comprising a hollow rotating and feeding shaft (34) connected to the supply, wherein the treatment disc is connected to a treatment disc motor (33), and wherein the treatment disc carries a friction foam, said disc, carrying its foam, being impregnated with abrasive particles in a continuous flow, thereby making said disc abrasive, **characterized in that** at least one treatment head thrust propeller (35) is provided on the treatment head substantially opposite said containment chamber, and **in that** in operation, a thrust exerted by the treatment head propeller (35) added to an external pressure of an ambient medium is slightly greater than an opposite force resulting from an internal pressure in the containment chamber (31), thereby enabling a layer of the abrasive mixture (40) to be held between the foam and the internal wall (3).

2. The system according to claim 1, wherein the containment chamber (31) comprises at least one outlet orifice in fluid communication with at least one recovered abrasive mixture tank (22).

3. The system according to any one of preceding claims, wherein the means (10, 11) for moving the treatment head (30) along the internal wall to be polished comprise at least one horizontal rail (11) and at least one vertical rail (10).

4. The system according to claim 3, wherein at least one of the rails is movably mounted.

5. The system according to any one of preceding claims, further comprising a circuit for recirculating the abrasive mixture.

6. A method for polishing treating internal walls of aquatic enclosures, for the implementation of the polishing treating system according to any one of claims 1 to 5, comprising the following steps:
- feeding a surface treatment head (30) with an abrasive mixture (40);
- the received abrasive mixture (40) is transmitted to the containment chamber (31) of the surface treatment head;
- impregnating the treatment disc (32) carrying a foam provided in the containment chamber with the received abrasive mixture (40), and the disc carrying a foam is impregnated with abrasive particles with a continuous flow, thereby making the disc abrasive;
- treating one of the internal walls (3) by friction of the rotating treatment disc (32) against the wall;
- the used abrasive mixture (40) is rejected;
- the surface treatment head (30) is moved along the wall;
**characterized in that**
- said at least one propeller (35) providing thrust on said treatment head, provided on the treatment head, substantially opposite said containment chamber, generates a thrust, and **in that**
- the thrust exerted by the propeller added to the external pressure of an ambient medium is slightly greater than an opposite force resulting from an internal pressure in the containment chamber (31), thereby enabling a layer of the abrasive mixture (40) to be held between the foam and one of the internal walls.

7. The method according to claim 6, wherein the recovered abrasive mixture (41) is used in several treatment cycles.

8. The method according to claim 6, wherein a pressure differential is adjusted to facilitate movement of the surface treatment head (30) on the wall by limiting friction at all levels of working depth of the surface treatment head while ensuring containment of the abrasive mixture in the containment chamber (31).
